Europäisches Patentamt

European Patent Office

Office européen des brevets

(11) Numéro de publication : **0 635 923 A1**

## (12) DEMANDE DE BREVET EUROPEEN

(21) Numéro de dépôt : **94410049.4**

(22) Date de dépôt : **15.07.94**

(51) Int. Cl.⁶ : **H02H 9/04**

(30) Priorité : **19.07.93 FR 9309139**

(43) Date de publication de la demande :
**25.01.95 Bulletin 95/04**

(84) Etats contractants désignés :
**DE FR GB IT**

(71) Demandeur : **SGS-THOMSON
MICROELECTRONICS S.A.
7, Avenue Galliéni
F-94250 Gentilly (FR)**

(72) Inventeur : **Rault, Pierre
109bis, Rue Anatole France
F-37540 Saint Cyr/Loire (FR)**

(74) Mandataire : **de Beaumont, Michel
1bis, rue Champollion
F-38000 Grenoble (FR)**

(54) **Circuit de protection contre des surtensions à forte énergie à tension d'écrêtage controlée.**

(57) La présente invention concerne un circuit de protection contre des surtensions constitué d'un composant écrêteur de tension (Z2) disposé entre deux de ses entrées (E1, E2), qui comprend en outre un composant de limitation de courant (CLD) connecté entre l'une (E1) des entrées et une borne de connexion (T1) vers cette entrée.

Fig 3

EP 0 635 923 A1

La présente invention concerne le domaine de la protection des circuits électroniques contre des surtensions accidentelles.

Une façon simple et classique de protéger un circuit contre des surtensions accidentelles susceptibles de se produire entre deux bornes de ce circuit consiste à disposer entre ses deux bornes d'entrée un dispositif écrêteur dont le plus simple est une diode à avalanche couramment appelée diode zener.

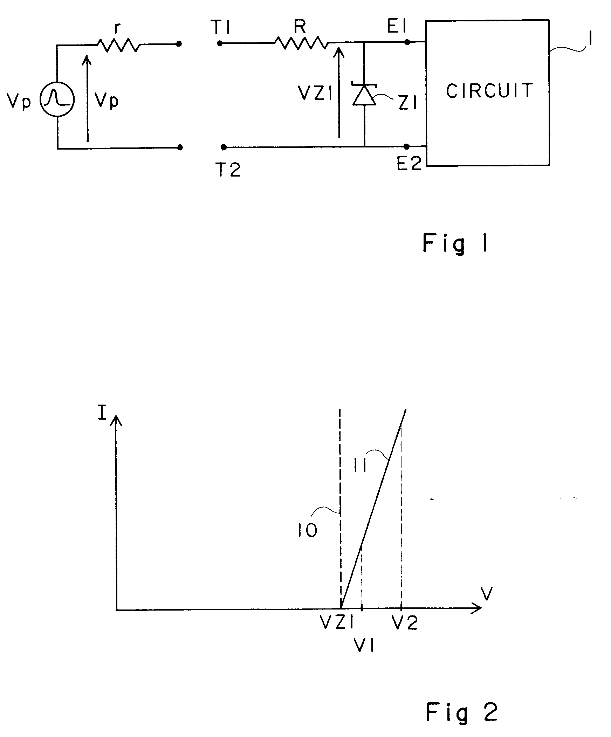

Le schéma d'un tel circuit de protection classique est illustré en figure 1 dans laquelle le circuit à protéger est désigné par la référence 1 et comprend des entrées à protéger E1 et E2. Une diode zener Z1 est disposée entre les entrées E1 et E2. Ces entrées sont reliées à des bornes de connexion extérieures T1 et T2 sur lesquelles est susceptible de survenir une surtension. Il existe dans certains cas une résistance R liée au circuit de connexion dont la valeur est généralement très faible et mal connue.

L'apparition d'une surcharge peut être figurée par une source de tension $V_p$ en série avec une résistance r de très faible valeur. Selon des normes couramment admises, cette source $V_p$ peut être considérée comme fournissant une surcharge d'une tension de 1000 volts qui chute à 500 volts au bout d'une durée de 50 microsecondes. Sur un court-circuit, cette source est susceptible de fournir un courant de 500 ampères.

La caractéristique courant-tension (I-V) d'un composant écrêteur tel qu'une diode zener est illustrée très schématiquement en figure 2. La tension d'avalanche nominale du composant est désignée par VZ1. Toutefois, cette tension d'avalanche ne reste pas constante suivant une courbe 10, mais varie avec le courant qui traverse la diode zener selon une courbe 11. Ainsi, la tension aux bornes de la diode zener prendra une valeur VZ1(I), par exemple V1 ou V2 selon la valeur du courant I dans cette diode zener pendant la phase d'avalanche. En pratique, la résistance dynamique d'un composant écrêteur n'est pas négligeable et, pour un composant écrêteur dont la tension d'avalanche nominale VZ1 est de 500 volts, la tension aux bornes réelle V2 sera par exemple de 600 volts pour un courant impulsionnel de 40 ampères. Ceci impose de choisir un composant écrêteur dont la tension d'avalanche nominale soit nettement plus faible que la valeur de tension maximale contre laquelle on veut protéger le circuit 1. Cette valeur ne pourrait être clairement définie que si l'on connaissait exactement le courant $I_{pp}$ traversant la diode zener pendant la surtension. Ce courant Ipp est

$$I_{pp} = [Vp - VZ1(I)]/(r + R).$$

D'autre part, la puissance crête dissipée dans l'écrêteur sera égale au produit de la tension VZ1(I) aux bornes de cet écrêteur par le courant $I_{pp}$. Les dimensions et donc le coût de la diode zener seront liés à cette puissance crête et à la durée de la surcharge.

Ainsi, en pratique, étant donné que l'on ne connaît généralement pas la valeur de R dans un circuit donné, on est amené à surdimensionner les diodes zener de protection pour être sûr d'éviter leur destruction au cours d'une surcharge et pour protéger efficacement le circuit 1. On est aussi amené à utiliser des diodes zener dont la tension nominale est nettement inférieure à la tension à l'encontre de laquelle on veut se protéger pour tenir compte de l'augmentation de la valeur d'écrêtage due au passage du courant dans la diode zener.

Ce qui précède a été exposé en relation avec un dispositif d'écrêtage tel qu'une diode zener, il sera clair pour l'homme de l'art que le même phénomène prend place pour tout dispositif d'écrêtage, par exemple une varistance à oxyde de zinc et que les explications données s'appliquent également au cas de dispositifs d'écrêtage bidirectionnels.

Un objet de la présente invention est de prévoir un circuit de protection contre des surtensions dans lequel le seuil de surtension soit nettement défini en fonction des caractéristiques du composant écrêteur choisi.

Un autre objet de la présente invention est de prévoir un tel circuit qui limite la puissance crête au cours de la surcharge et qui permette donc de limiter les dimensions et le coût du dispositif écrêteur.

Pour atteindre ces objets, la présente invention prévoit un circuit de protection contre des surtensions constitué d'un composant écrêteur de tension disposé entre deux entrées dudit circuit, qui comprend en outre un composant de limitation de courant connecté entre l'une des entrées et une borne de connexion vers cette entrée.

Selon un mode de réalisation de la présente invention, le composant de limitation de courant peut supporter une tension supérieure à la différence entre la tension maximale de la surtension et la tension d'écrêtage du composant écrêteur.

Selon un mode de réalisation de la présente invention, le composant de limitation de courant est un transistor MOS à grille et source interconnectées, utilisé entre sa source et son drain.

Ces objets, caractéristiques et avantages ainsi que d'autres de la présente invention seront exposés en détail dans la description suivante de modes de réalisation particuliers faite en relation avec les figures jointes parmi lesquelles :

la figure 1 représente un écrêteur prévu pour protéger un circuit, associé à une source de perturbation ;

la figure 2 représente schématiquement la courbe caractéristique courant-tension d'un écrêteur ;

la figure 3 représente un circuit de protection selon la présente invention ;

la figure 4 représente la caractéristique courant-tension d'un dispositif de limitation de courant utilisé dans la présente invention ; et

la figure 5 représente la caractéristique courant-tension d'un dispositif d'écrêtage en tension utilisé selon la présente invention.

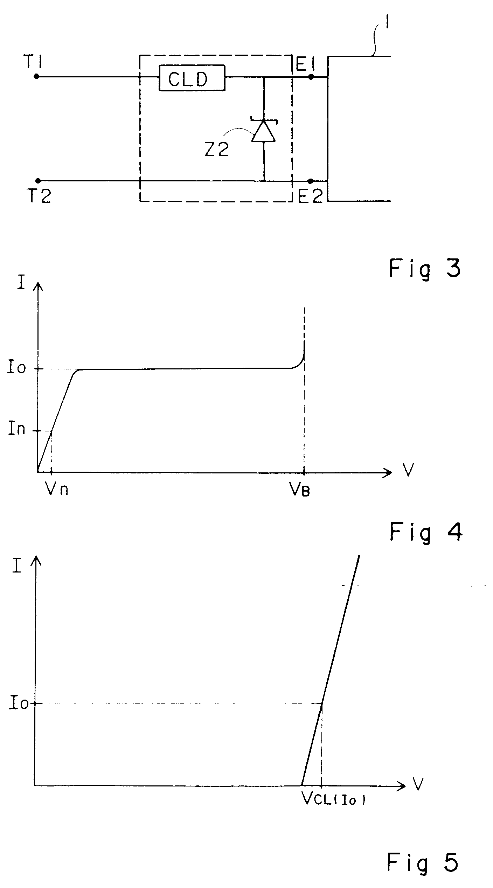

Comme le représente la figure 3, la présente invention prévoit de remplacer l'écrêteur Z1 de la figure 1 par l'association d'un écrêteur Z2 disposé comme l'écrêteur Z1 et d'un dispositif de limitation de courant CLD connecté entre l'entrée E1 du circuit à protéger et la borne de connexion T1 de ce circuit vers l'extérieur.

Le dispositif de limitation de courant a une caractéristique telle qu'illustrée en figure 4, à savoir qu'il limite le courant à une valeur $I_0$ et que, pour le courant de fonctionnement maximum normal In du circuit 1, il présente une très faible chute de tension $v_n$. Un tel composant peut par exemple être constitué d'un transistor MOS ou IGBT à déplétion dont la source et la grille sont interconnectées, ce composant étant utilisé entre ses bornes de drain et de source. Un tel composant est décrit dans la demande de brevet français 93/05 886 déposée le 10 mai 1993 par la demanderesse. En outre, comme le représente la figure 4, un tel composant est susceptible de claquer au-delà d'une tension de claquage VB. Cette tension de claquage sera choisie supérieure à la valeur maximum possible $V_p$ de la surtension réduite de la tension d'écrêtage VCL de l'écrêteur Z2.

Avec un tel circuit, le courant maximum dans l'écrêteur Z2 lors de l'apparition d'une surtension est égal à $I_0$. Il en résulte, comme le montre la figure 5, que la tension d'écrêtage de l'écrêteur Z2 est fixée à une valeur prédéterminable VCL($I_0$). Ainsi, la puissance crête dans l'écrêteur Z2 lors d'une surtension sera :

$$P(Z2) = VCL(I_0) \times I_0. \quad (1)$$

La puissance crête absorbée par le composant de limitation de courant CLD sera :

$$P(CLD) = [V_p - VCL(I_0)] I_0, \quad (2)$$

la puissance totale étant bien entendu :

$$P_t = V_p \times I_0. \quad (3)$$

Pour mieux faire comprendre les avantages de la présente invention, on considèrera ci-après un exemple pratique dans lequel le circuit à protéger est un convertisseur alimenté par la tension du secteur redressée. Ce convertisseur ne peut supporter, par exemple, que 500 V et doit être protégé contre des surtensions qui peuvent atteindre 1000 volts. On considère également le cas où la valeur de r+R est de l'ordre de 12 ohms.

En utilisant le circuit classique de la figure 1, le courant $I_{pp}$ est :

$$I_{pp} = (V_p - VCL)/(R + r) = (1000 - 500)/12 = 40 \text{ ampères.}$$

La puissance crête dans l'écrêteur Z1 sera alors :

$$P(Z1) = VCL.I_{pp} = 500 \times 40 = 20 \text{ kW.}$$

Par contre, en utilisant selon la présente invention un composant limiteur de courant limitant le courant à une valeur de 0,5 A, la puissance consommée pendant une surtension dans l'écrêteur sera :

$$P(Z2) = VCL.I_0 = 500 \times 0,5 = 250 \text{ W,}$$

et la puissance crête dans le composant de limitation de courant sera :

$$P(CLD) = [V_{pp} - VCL(I_0)].I_0 = (1000 - 500)0,5 = 250 \text{ W.}$$

Ainsi, la puissance totale absorbée dans les composants Z2 et CLD sera de 500 watts au lieu de 20 kilowatts dans le composant Z1 du système classique. On a donc bien obtenu les avantages d'une fixation précise de la tension d'écrêtage, et d'une limitation de la puissance dissipée dans l'ensemble des composants CLD et Z2 constituant le circuit de protection contre une surtension selon l'invention.

**Revendications**

1. Circuit de protection contre des surtensions constitué d'une diode à avalanche (Z2) disposée entre deux entrées (E1, E2) dudit circuit, caractérisé en ce qu'il comprend en outre un composant (CLD) de limitation de courant à une valeur prédéterminée (I0) connecté entre l'une (E1) des entrées et une borne de connexion (T1) vers cette entrée.

2. Circuit de protection selon la revendication 1, caractérisé en ce que le composant de limitation de courant (CLD) peut supporter une tension supérieure à la différence entre la tension maximale ($V_p$) de la surtension et la tension d'écrêtage (VCL) de la diode à avalanche.

3. Circuit de protection selon la revendication 1, caractérisé en ce que le composant de limitation de courant (CLD) est un transistor MOS à grille et source interconnectées, utilisé entre sa source et son drain.

Fig 1

Fig 2

4

Fig 3

Fig 4

Fig 5

Office européen
des brevets

**RAPPORT DE RECHERCHE EUROPEENNE**

Numero de la demande

EP 94 41 0049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 401 410 (SIEMENS)<br>* colonne 1, ligne 29 - ligne 49 *<br>* colonne 2, ligne 42 - colonne 3, ligne 24; figures 1A,2A *<br>--- | 1-3 | H02H9/04 |
| A | DE-A-36 21 200 (SIEMENS)<br>* abrégé *<br>--- | 1 | |
| A | US-A-3 737 725 (DONELLY)<br>* abrégé *<br>----- | 1 | |

**DOMAINES TECHNIQUES RECHERCHES (Int.Cl.6)**

H02H

Le présent rapport a été établi pour toutes les revendications

| Lieu de la recherche | Date d'achèvement de la recherche | Examinateur |
|---|---|---|
| LA HAYE | 27 Octobre 1994 | Salm, R |

EPO FORM 1503 03.82 (P04C02)